# EUROPÄISCHE PATENTANMELDUNG

(11) **EP 4 176 777 A1**
(43) Veröffentlichungstag der Anmeldung: **10.05.2023**
(21) Anmeldenummer: 22203820.0
(22) Anmeldetag: 26.10.2022
(51) Int. Cl.: A47J 36/12, A47J 36/06, A47J 43/07

(54) **DECKELHALTER**

(30) Priorität: 03.11.2021 DE 202021106019 U
(71) Anmelder: Wundermix GmbH, 85748 Garching b. München (DE)
(72) Erfinder: KEUSGEN, Adrian, 79346 Endingen am Kaiserstuhl (DE)
(74) Vertreter: Patentanwälte Bauer Vorberg Kayser

(57) **Zusammenfassung**

Die vorliegende Erfindung betrifft einen Deckelhalter (20) zur Befestigung an einem elektrischen Küchengerät (46). Dieser weist ein Grundelement (24) auf mit
- zumindest zwei Schenkeln (26), die derart ausgeführt und angeordnet sind, dass sie an einem Strukturelement eines Küchengeräts (46) befestigbar sind,
- zumindest einem Halteelement (28), an dem ein Deckel (32) des Küchengeräts (46) befestigbar ist.
wobei der Deckelhalter (20) derart ausgeführt und am Küchengerät (46) anzuordnen ist, dass der Deckel (32) oberhalb der Topföffnung (50) eines in das Küchengerät (46) eingesetzten Topfes (48) angeordnet ist, dass sich von einer Innenseite (40) des Deckels (32) lösende Rückstände oder Flüssigkeiten in den Topf (48) fallen oder fließen.

## Beschreibung

Die vorliegende Erfindung betrifft eine einen Deckelhalter für einen Topf eines Küchengeräts. Weiterhin betrifft die Erfindung ein Küchengerät mit einem solchen Deckelhalter.

Es sind zahlreiche elektrische Küchengeräte bekannt, die einen Topf mit einer Topföffnung und einem die Topföffnung verschließenden Deckel aufweisen. Einige der Küchengeräte können nur betrieben werden, wenn der Topf durch den Deckel verschlossen ist. Zur Überprüfung weisen die Küchengeräte entsprechende Detektionsmittel auf, die detektieren, ob der Topf ordnungsgemäß verschlossen ist. Dadurch soll einerseits verhindert werden, dass der Inhalt des Topfes herausspritzen oder -fliegen kann, andererseits kann der Deckel sicherheitsrelevant sein, da im Innern des Topfes beispielsweise Messer rotieren.

Daraus ergibt sich der Nachteil, dass der Topfdeckel vor Hinzugabe von Kochgut, Lebensmitteln oder Gewürzen jedes Mal vom Topf abgenommen und insbesondere vor jedem nächsten Zubereitungsschritt wieder auf den Topf aufgesetzt werden muss. Dies bedeutet auch, dass der Topf zwischen den Arbeitsschritten in der Regel abgelegt wird, damit der Benutzer beide Hände für die Hinzugabe weiteren Kochguts für den nächsten Zubereitungsschritt nutzen kann. Dies ist nicht nur zeitaufwendig, sondern verlangt auch, dass im Umfeld des Küchengeräts ausreichend freier Platz zur Ablage des Deckels vorhanden ist.

Hinzu kommt, dass der Deckel auf seiner der Innenseite des Topfes zugewandten Innenfläche oftmals aufgrund des vorangegangenen Zubereitungsschritts verschmutzt ist. Beispielsweise können sich bei der Zubereitung von Saucen oder Schnittgut Saucenspritzer oder Schnittgut an der Innenfläche des Deckels festsetzen. Dies führt dazu, dass das Ablegen des Deckels zwischen den Arbeitsschritten oftmals dazu führt, dass auch der Ablagebereich verschmutzt wird. Insbesondere bei Flüssigkeiten besteht die Gefahr, dass diese beim Abnehmen, Transportieren und Ablegen des Deckels von diesem abtropfen und den Untergrund verschmutzen.

Die Aufgabe der Erfindung besteht darin, eine Vorrichtung vorzuschlagen, die mit einem elektrischen Küchengerät verwendet werden kann und dazu beiträgt, die oben genannten Nachteile aufgrund des Ablegens des Deckels zu vermeiden. Weiterhin besteht die Aufgabe der Erfindung darin, ein elektrisches Küchengerät zu schaffen, welches die oben genannten Nachteile ebenfalls nicht aufweist. Die Lösung soll dabei kostengünstig herstellbar und einfach zu nutzen sein.

Die Erfindung wird durch einen Deckelhalter mit den Merkmalen des Patentanspruchs 1 und ein Küchengerät mit den Merkmalen des Anspruchs 7 gelöst.

Der erfindungsgemäße Deckelhalter kann nachträglich mit dem Topf verbunden werden. Dabei macht er sich bereits vorhandene Strukturelemente an der Außenseite des Topfes zu Nutze. Der erfindungsgemäße Deckelhalter ist in einer besonders vorteilhaften Ausführungsvariante insbesondere kompatibel zu den Küchengeräten Thermomix^{®} 5, 6 und 31 und kann schnell und einfach mit diesen verwendet werden.

Der Deckelhalter weist ein Grundelement auf, das in Seitenansicht etwa eine U-Form aufweist. Über das Grundelement kann der Deckelhalter mit einem Strukturelement des Küchengeräts form-, reib- oder reibformschlüssig verbunden werden, es wird sozusagen auf das Strukturelement aufgeklipst. Die Verbindung mit dem Strukturelement kann insbesondere bei einer ausschließlich reibschlüssigen Verbindung durch eine elastische Verformung des Grundelements unterstützt werden. Das U-förmige Grundelement weist zwei etwa parallel verlaufende Schenkel auf, die sich beim Aufschieben auf das Strukturelement aufweiten und dadurch durch ein Einklemmen des Strukturelements zwischen den Schenkeln eine Haltekraft ausbilden. Der Reib- oder Formschluss ist dabei derart ausgeführt, dass der Deckelhalter zumindest in einer Richtung vom Strukturelement lösbar ist, also von diesem abgezogen werden kann.

Das Grundelement bzw. die beiden Schenkel können derart ausgeführt sein, dass sie das Strukturelement im aufgesetzten Zustand bereichsweise hintergreifen. Dies bewirkt, dass beim Entnehmen des Deckels der Deckelhalter nicht ungewollt vom Strukturelement abgezogen wird.

Hierzu kann zumindest einer der beiden Schenkel an seinem freien Ende einen entsprechenden in Richtung des anderen Schenkels gegenüber einer Grunderstreckung des Schenkels geknickten oder gebogenen Haltebereich aufweisen. Vorzugsweise weisen beide Schenkel jeweils einen solchen Haltebereich an ihrem freien Ende auf. Bei dieser Ausführungsvariante ist das Grundelement derart elastisch ausgeformt, dass es zum Aufsetzen auf das Strukturelement ausgeweitet werden kann und der oder die Haltebereiche dadurch hinter das Strukturelement geführt werden können. Auch bei dieser Variante kann durch die Elastizität vorzugsweise eine zusätzliche Haltekraft aufgebracht werden, die Schenkel werden durch die Rückstellkraft gegen das Strukturelement gedrückt. Je nach Ausführungsvariante kann auf diese zusätzliche Haltekraft aber auch verzichtet werden. Zum Entfernen des Deckelhalters bzw. des Grundelements werden die beiden Schenkel wieder auseinander gedrückt und der Deckelhalter wieder vom Strukturelement abgezogen.

Das Grundelement ist weiterhin mit zumindest einem Halteelement für den Deckel verbunden. Vorzugsweise sind das Grundelement und das Halteelement einstückig ausgeformt. Der Deckel kann mit dem Deckelhalter über das Halteelement verbunden werden, sodass dieser am Deckelhalter und somit am Strukturelement des Küchengeräts gehalten ist. Das Halteelement ist in einer besonders bevorzugten Ausführungsvariante durch eine Nut gebildet, in die ein Element des Deckels, vorzugsweise ein Deckelrand oder auch ein Deckelgriff einführbar ist.

Die Nut kann durch zwei vom Grundelement abstehende, etwa parallel verlaufende Wandabschnitte ausgebildet werden, sie kann aber auch in die Grundfläche des Grundelements als Vertiefung eingeformt sein.

Der Deckelhalter kann beispielsweise an einem Griff des Küchengeräts befestigt werden. Beispielsweise weist das Küchengerät Thermomix^{®} einen Griff auf, der seitlich der Topföffnung oberhalb des Topfes angeordnet ist, er erstreckt sich also bogenförmig neben der Topföffnung des eingesetzten Topfes. Der Deckelhalter ist derart an den Griff angepasst ausgeführt, dass der Deckelhalter etwa mittig des Griffs an diesem befestigbar ist. Der Deckel kann somit in einer kurzen Bewegung vom Topf abgenommen und in den Deckelhalter eingesetzt werden. Diese Ausführung macht sich zunutze, dass der Deckel des Thermomix^{®} der Generation 5 und 6 auf seiner dem Topf abgewandten Deckeloberfläche eine vertikal aufrecht stehende, kreisförmige umlaufende Wand aufweist. Mit dieser Wand kann er in den Deckelhalter eingesetzt werden.

Dabei ist der Deckelhalter derart ausgeführt, dass der Abschnitt der Wand, der sich im Deckelhalter befindet, etwa aufrecht ausgerichtet über der Topföffnung angeordnet ist. Dadurch ist gewährleistet, dass sich auf der der Wand gegenüberliegenden Innenseite des Deckels anhaftende Flüssigkeiten wie Saucen oder Kondensflüssigkeit, aber auch Kochgut aufgrund der Schwerkraft und der Position des Deckels zurück in den Topf fließt oder fällt. Die Haltelemente sind dementsprechend auf der der Topföffnung zugewandten Seite des Grundelementes angeordnet. Ist als Halteelemente eine Nut ausgebildet, verläuft diese etwa parallel zur Fläche der Topföffnung bzw. zum Rand des Topfes. Dadurch kann die Wand des Deckels in die Nut eingeführt werden und verläuft in dem Abschnitt, der sich in der Nut befindet, ebenfalls etwa parallel zur Haupterstreckungsfläche der Topföffnung. Als besonders bevorzugt hat sich eine Position erwiesen, bei der der Deckel bzw. sein Haupterstreckungsebene unter einem Winkel von etwa 1°-10° zur lotrechten Vertikalachse schräg gestellt ist. Der Deckel steht in der eingesetzten Halteposition schräg also aufrecht über der Topföffnung.

Erfindungsgemäß ist der Deckelhalter derart ausgeführt, dass auch ein Messbecher des Thermomix^{®} in diesen eingeführt werden kann und sicher gehalten ist. Weiterhin weist der Deckelhalter eine Breite auf, die ein Anbringen von zwei Deckelhaltern nebeneinander am Griff des Thermomix^{®} der Generation 5 oder 6 erlaubt. Dies wiederum ermöglicht das Halten von zwei Elementen, beispielsweise zwei Mixbechern oder je nach Anordnung der Deckelhalter auch von einem Deckel und einem Mixbecher.

Die nachfolgenden Figuren zeigen zwei Ausführungsbeispiele der Erfindung. Die in den Figuren gezeigten Ausführungsbeispiele sind nur beispielhaft zu verstehen.
- Fig. 1:: eine erste Ausführungsvariante eines Deckelhalters, aufgesetzt auf einen Griff eines Küchengeräts,
- Fig. 2:: den Deckelhalter aus Fig. 1 in Seitenansicht,
- Fig. 3:: eine erste Ausführungsvariante eines Deckelhalters in perspektivischer Ansicht,
- Fig. 4:: eine zweite perspektivische Ansicht des Deckelhalters aus Fig. 3,
- Fig. 5:: den Deckelhalter aus Fig. 3 aufgesetzt auf einen Griff eines Küchengeräts,
- Fig. 6:: der Deckelhalter aus Fig. 3 aufgesetzt auf einen Griff eines Küchengeräts, in einer Ansicht von schräg unten.
- Fig. 7:: eine stark vereinfachte Darstellung eines Küchengeräts mit einem Deckelhalter und einem Deckel.

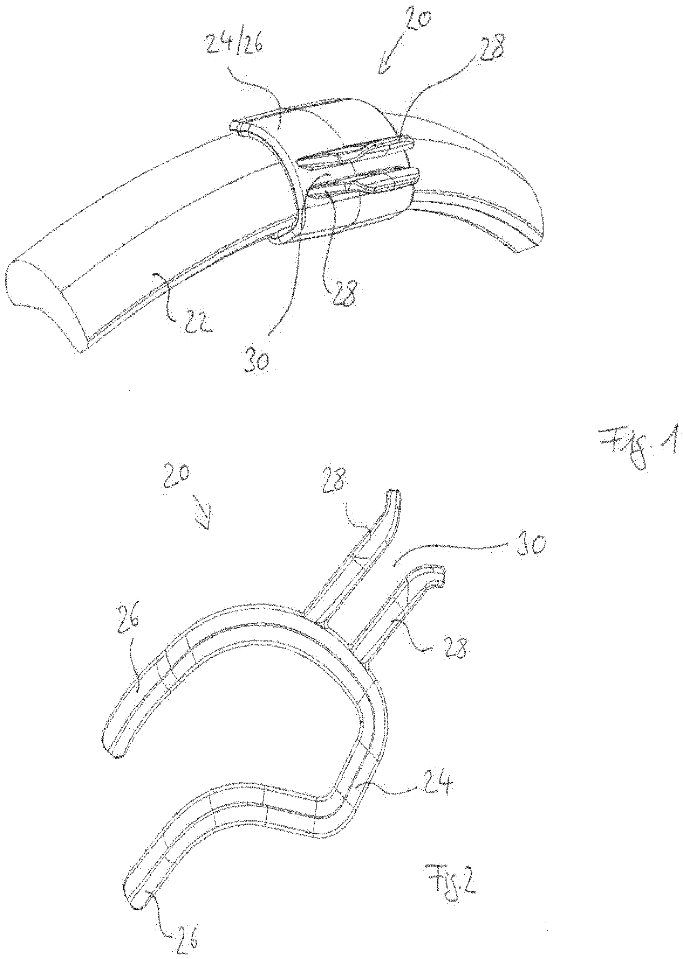

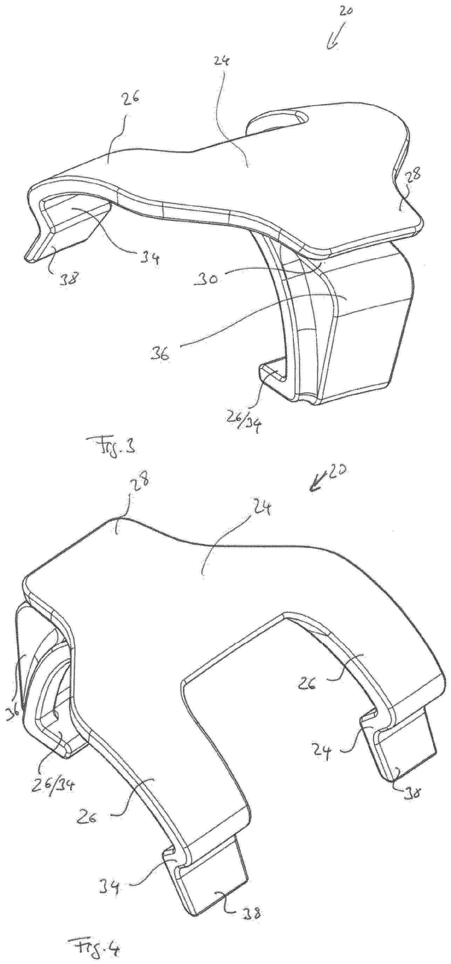

Die Figuren 1 und 2 zeigen eine erste Ausführungsvariante und die Figuren 3 bis 6 eine zweite Variante eines erfindungsgemäßen Deckelhalters 20. Der Deckelhalter 20 ist in den gezeigten Ausführungsbeispielen derart ausgeführt, dass er an einem Griff 22 eines elektrischen Küchengeräts befestigbar ist.

Der Deckelhalter weist ein Grundelement 24 auf, welches in Seitenansicht etwa U-förmig mit zwei Schenkeln 26 ausgeführt ist. Über die beiden Schenkel 26 ist es an einem Strukturelement, in den gezeigten Ausführungsbeispielen am Griff 22 des Küchengeräts befestigbar.

Bei der Ausführungsvariante gemäß der Figuren 1 und 2 ist das Grundelement 24 lediglich reibschlüssig auf dem Griff 22 gehalten, es wird auf diesen aufgeschoben und nach Gebrauch von diesem wieder abgezogen. Das Grundelement 24 ist dementsprechend an den Griff 22 angepasst ausgeführt.

Erkennbar sind weiterhin zwei Halteelemente 28, die zwischen sich eine Nut 30 ausbilden. In diese Nut 30 kann ein Element eines Deckels 32 oder eines Mixbechers eingeführt werden, sodass der Deckel 32 bzw. der Mixbecher zwischen den Halteelementen 28 gehalten ist.

Die Ausführungsvariante gemäß der Figuren 3 bis 6 ist prinzipiell entsprechend der Ausführungsvariante der Figuren 1 und 2 ausgeführt, allerdings sind insbesondere die Schenkel 26 anders ausgeführt. Insgesamt sind drei Schenkel 26 vorgesehen, von denen zwei auf der einen Seite angeordnet sind und parallel zueinander verlaufen, während der dritte Schenkel 26 auf der anderen Seite mittig zwischen den beiden anderen Schenkeln 26 angeordnet ist. Auch bei dieser Ausführungsvariante werden die Halteelemente 28 auf den Griff 22 aufgeschoben und schließen diesen zwischen sich ein. Im Gegensatz zur ersten Ausführungsvariante weisen die Schenkel 26 aber an ihren freien Enden abgekröpfte Haltebereiche 34 auf, die den Griff 22 hintergreifen. Die Haltebereiche 34 der beiden parallel zueinander verlaufenden Schenkel 26 weisen darüber Abschnitte 38 auf, die im aufgesetzten Zustand schräg vom Griff 22 abstehen und ein Verformen der Schenkel 26, beispielsweise zum Abnehmen des Deckelhalters 20 vom Griff 22 erleichtern. Auch der Deckelhalter 20 der zweiten Ausführungsvariante wird also auf den Griff 22 aufgeklipst, wobei sich die Schenkel 26 elastisch aufweiten und die Haltebereiche 34 dann hinter den Griff 22 zurückfedern.

Die Haltebereiche 34 bewirken, dass beim Entnehmen des Deckels 32 der Deckelhalter 20 nicht ungewollt vom Strukturelement, also vom Griff 22, abgezogen wird.

Bei der Ausführungsvariante gemäß der Figuren 3 bis 6 ist eine Nut 30 zwischen zwei Halteelemente 28 vorgesehen. Die beiden Halteelemente 28 sind etwas anders ausgeformt, ein Halteelemente 28 steht im Wesentlichen vom Grundelement 24 ab, während das andere Halteelement 28 durch einen bauchigen Vorsprung 36 des Grundelements 24 gebildet ist.

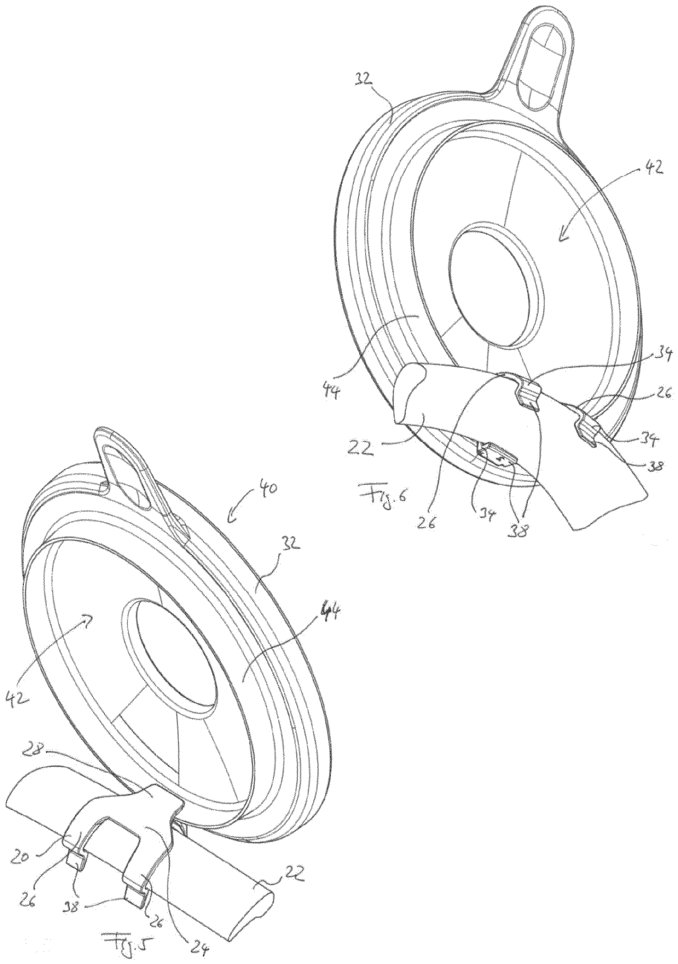

Die Figuren 5 bis 7 verdeutlichen, wie der Deckel 32 in einem an einem Griff 22 befestigten Deckelhalter 20 gehalten ist. Die Figuren zeigen ein Ausführungsbeispiel mit einem Küchengerät 46 vom Typ Thermomix^{®}. Der Deckel 32 eines Thermomix^{®} weist eine einem Topf 48 zugewandte Innenseite 40 und eine dem Topf 48 abgewandte Außenseite 42 auf. Auf der Außenseite 42 befindet sich eine kreisförmig umlaufende Wand 44, die von der Außenseite 42 vertikal absteht. Der Deckel 32 kann mit dieser Wand 44 in die Nut 30 des Deckelhalters 20 eingesetzt werden. Die Nut 30 hat eine Tiefe von etwa 13 mm und eine Höhe von etwa 5 mm. Durch die Breite und Höhe und aufgrund des Radius der Wand 44 bzw. der Nut 30 entsteht eine Dreipunktlagerung, die eingefügte Wand 44 berührt die Nut 30 an drei Stellen, zweimal oben und einmal unten in der Nut 30. Dies bewirkt, dass die Wand 44 schnell und einfach in die Nut 30 einführbar ist. Erst durch das Kippen des Deckels 32 in die eigentliche Halteposition im Deckelhalter 20 wird die volle Stabilität erzeugt.

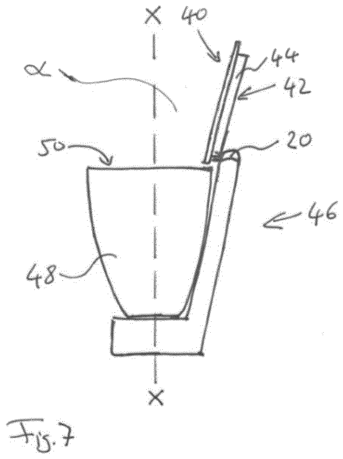

Aus Figur 7 ist auch erkennbar, dass der Deckel 32 im eingesetzten Zustand nicht parallel zu einer sich lotrecht durch den Topf 48 erstreckenden Vertikalachse X-X ausgerichtet ist, sondern schräg zu dieser steht. Ein Winkel α zwischen der Vertikalachse X-X beträgt im gezeigten Ausführungsbeispiel etwa 10°, er kann aber auch etwas weniger oder mehr betragen. Durch die Steigung soll die Flüssigkeit entlang des Deckels 32 laufen und gleichzeitig den Deckel 32 im stabilen Gleichgewicht sichern.

Erfindungsgemäß ist der Deckelhalter 20 dabei derart ausgeführt und kann derart am Griff 22 angeordnet werden, dass zumindest ein dem Topf 48 zugewandter Bereich der Innenseite 40 über einer Topföffnung 50 eines im Küchengerät eingesetzten Topfes 48 angeordnet ist. An der Innenseite 40 anhaftende Flüssigkeiten fließen in dieser Position wieder in den Topf 48 zurück, aber auch sich von der Innenseite 40 lösendes Kochgut fällt wieder in den Topf 48 hinein.

Der Deckelhalter 20 gemäß der Figuren 2-7 hat einer Gesamtbreite von etwa 54 mm. Die Nutzung der um 360° umlaufenden Wand 44 als Verbindungsmittel mit dem Deckelhalter 20 hat den Vorteil, dass der Deckel 32 in beliebiger Rotationsposition in die Nut 30 eingefügt werden kann.

Die Erfindung ist nicht auf die beiden Ausführungsbeispiel beschränkt, der Deckelhalter 20 kann auch andere Formen aufweisen. Insbesondere die Schenkel 26 und die Halteelemente 28 können in Anpassung an das Küchengerät bzw. das Strukturelement unterschiedlich ausgeführt sein.

### Bezugszeichenliste

- 20: Deckelhalter
- 22: Griff
- 24: Grundelement
- 26: Schenkel
- 28: Halteelement
- 30: Nut
- 32: Deckel
- 34: Haltebereiche
- 36: Vorsprung
- 38: Abschnitte
- 40: Innenseite
- 42: Außenseite
- 44: Wand
- 46: Küchengerät
- 48: Topf
- 50: Topföffnung

- X-X: Vertikalachse

## Patentansprüche

1. Deckelhalter (20) zur Befestigung an einem elektrischen Küchengerät (46), aufweisend ein Grundelement (24) mit
- zumindest zwei Schenkeln (26), die derart ausgeführt und angeordnet sind, dass sie an einem Strukturelement eines Küchengeräts (46) befestigbar sind,
- zumindest einem Halteelement (28), an dem ein Deckel (32) des Küchengeräts (46) befestigbar ist.
wobei der Deckelhalter (20) derart ausgeführt und am Küchengerät (46) anzuordnen ist, dass der Deckel (32) oberhalb der Topföffnung (50) eines in das Küchengerät (46) eingesetzten Topfes (48) angeordnet ist, dass sich von einer Innenseite (40) des Deckels (32) lösende Rückstände oder Flüssigkeiten in den Topf (48) fallen oder fließen

2. Deckelhalter (20) nach Anspruch 1, **dadurch gekennzeichnet, dass** zwei sich vom Grundelement (24) weg erstreckende Halteelemente (28) vorgesehen sind, die zwischen sich eine Nut (30) zur bereichsweisen Aufnahme des Deckels (32) ausbilden.

3. Deckelhalter (20) nach Anspruch 1 oder Anspruch 2, **dadurch gekennzeichnet, dass** zwei sich vom Grundelement (24) weg erstreckende Schenkel (26) vorgesehen sind, die derart ausgeführt und angeordnet sind, dass sie eine Aufnahme für das Strukturelement des Kochgeräts (48) ausbilden und auf das Strukturelement aufgeschoben werden können.

4. Deckelhalter (20) nach einem der Ansprüche 1 bis 3, **dadurch gekennzeichnet, dass** die Schenkel (26) elastisch federnd ausgeführt sind und an ihren freien Enden Haltebereiche (34) aufweisen, die das Strukturelement im aufgesetzten Zustand des Deckelhalters (20) hintergreifen.

5. Deckelhalter (20) nach einem der Ansprüche 2 bis 4, **dadurch gekennzeichnet, dass** der Deckelhalter (20) an ein Küchengerät der Serie Thermomix^{®}der Generation 5 oder 6 angepasst ausgeführt ist, wobei das Grundelement (24) auf einen Griff (22) aufschiebbar ausgeführt ist und der Deckel (32) mit einer von seiner Außenseite (42) vertikal abstehenden Wand (44) in die Nut (30) einführbar ist.

6. Deckelhalter (20) nach Anspruch 5, **dadurch gekennzeichnet, dass** der Deckelhalter (20) derart an dem Küchengerät der Serie Thermomix^{®} befestigbar ist, dass der Deckel (32) derart oberhalb einer Topföffnung (50) eines in das Küchengerät (46) eingesetzten Topfes (48) angeordnet ist, dass sich von einer Innenseite (40) lösende Rückstände oder Flüssigkeiten in den Topf fallen oder fließen.

7. Küchengerät (46), aufweisend einen Topf (48) mit einer Topföffnung (50) und einem Deckel (32) sowie einem lösbaren Deckelhalter (20), bestehend aus einem Grundelement (24) mit
- zumindest zwei Schenkeln (26), die derart ausgeführt und angeordnet sind, dass sie an einem Strukturelement des Küchengeräts (46) befestigbar sind,
- zumindest einem Halteelement (28), an dem der Deckel (32) des Topfes (48) befestigbar ist,
wobei der Deckelhalter derart an dem Küchengerät befestigbar ist, das der Deckel (32) derart oberhalb der Topföffnung (50) des in das Küchengerät (46) eingesetzten Topfes (48) angeordnet ist, dass sich von einer Innenseite (40) des Deckels (32) lösende Rückstände oder Flüssigkeiten in den Topf (48) fallen oder fließen

8. Küchengerät nach Anspruch 7, **dadurch gekennzeichnet, dass** der Deckelhalter (20) zwei Schenkel (26) aufweist, die zwischen sich eine Nut zur Aufnahme eines Griffes (22) des Küchengeräts ausbilden.

9. Küchengerät nach Anspruch 7 oder Anspruch 8, **dadurch gekennzeichnet, dass** der Deckelhalter (20) zwei Halteelemente (28) aufweist, die zwischen sich eine Nut (30) aufweisen, in die der Deckel bereichsweise einführbar ist.

10. Küchengerät nach Anspruch 8 oder Anspruch 9, **dadurch gekennzeichnet, dass** das Küchengerät ein Gerät der Serie Thermomix^{®} ist, der Deckelhalter (20) derart ausgeführt ist, dass er an einem Griff (32) befestigbar ist und eine von einer Außenseite (42) des Deckels (32) vertikal abstehende Wand (44) bereichsweise in die Nut (30) zwischen den Halteelementen (28) einführbar ist.
